# EUROPEAN PATENT APPLICATION

(11) **EP 4 598 141 A1**
(43) Date of publication of application: **06.08.2025**
(21) Application number: 22959781.0
(22) Date of filing: 26.09.2022
(51) Int. Cl.: H04W 48/20, H04W 24/10, H04W 76/23

(54) **TARGET UE DETERMINATION METHODS FOR UE-TO-UE RELAY SCENARIO OF USER EQUIPMENTS, AND APPARATUSES**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/121503
(87) International publication number: WO 2024/065129

(57) **Abstract**

Disclosed in the embodiments of the present application are target UE determination methods for a UE-to-UE relay scenario of user equipments. A method is executed by a first UE, the method comprising: acquiring a sidelink measurement between the first UE and a second UE, the sidelink measurement comprising a sidelink communication reference signal receiving power (SL-RSRP) and/or a sidelink discovery reference signal receiving power (SD-RSRP); according to the sidelink measurement between the first UE and the second UE and a predefined threshold, determining whether the first UE can become a relay UE; and in response to the first UE being capable of becoming a relay UE, periodically broadcasting a notification message. By implementing the embodiments of the present application, the first UE can determine, according to the acquired sidelink measurement between the first UE and the second UE and the predefined threshold, whether the first UE itself can become a relay UE, so as to determine whether the relay function can be provided for other UEs.

## Description

### TECHNICAL FIELD

The present disclosure relates to the field of communication technologies, and in particular to a method and an apparatus for target user equipment (UE) determination in a UE to UE relay scenario.

### BACKGROUND

In related art, user equipment (UE) A may not be directly connected to UE B, but may be connected to UE B through a relay of UE C. UE A and UE B are remote UEs, UE C providing the relay function is a relay UE, and the connected UEs communicate through sidelink unicast communication. This architecture is called a UE to UE (U2U) relay. To ensure the smooth progress of the U2U relay, UE C needs to determine whether UE A and UE B are target UEs that can use the relay function of UE C.

### SUMMARY

Embodiments of the present disclosure provide a method and an apparatus for target user equipment (UE) determination in a UE to UE relay scenario, which is applicable to a vehicle networking, such as vehicle to everything (V2X) communication, long term evolution-vehicle (LTE-V) communication, vehicle to vehicle (V2V) communication, etc., or is applicable to fields of intelligent driving, intelligent connected vehicles, etc., and can enable a relay UE to determine whether other UEs are able to be target UEs in the UE to UE relay scenario.

In a first aspect, the embodiments of the present disclosure provide a method for target UE determination in a UE to UE relay scenario. The method is performed by a first UE, and the method includes: measuring a signal strength between the first UE and a second UE; and determining the second UE with the signal strength meeting a first condition is able to be a target UE.

In the technical solution, the first UE can determine whether the second UE is able to be the target UE based on the signal strength between the first UE and the second UE, thereby solving the problem that the relay UE cannot determine the target UE in the UE to UE relay scenario.

In an implementation, the signal strength meeting the first condition includes: the signal strength meeting a requirement of a first threshold; or the signal strength continuously meeting the requirement of the first threshold within a first time period.

In an optional implementation, the first threshold is a minimum threshold, and the signal strength meeting the requirement of the first threshold includes: the signal strength being greater than or equal to the minimum threshold. Alternatively, the first threshold includes the minimum threshold and a maximum threshold, and the signal strength meeting the requirement of the first threshold includes: the signal strength being greater than or equal to the minimum threshold and being less than or equal to the maximum threshold.

In the technical solution, the first UE can determine whether the second UE is able to be the target UE based on the signal strength between the first UE and the second UE, the first threshold and the first time period, thereby solving the problem that the relay UE cannot determine the target UE in the UE to UE relay scenario.

In an optional implementation, the method further includes: determining the first threshold and/or the first time period based on the second UE.

Optionally, determining the first threshold and/or the first time period based on the second UE includes: receiving the first threshold and/or the first time period transmitted by the second UE.

Optionally, determining the first threshold and/or the first time period based on the second UE includes: determining a correspondence relationship between a threshold and/or a time period and a service; receiving service indication information transmitted by the second UE; and determining the first threshold and/or the first time period according to the service indication information and the correspondence relationship.

Optionally, the correspondence relationship between the threshold and/or the time period and the service is provided by at least one of a network device, a high layer, or an application layer.

In an implementation, the method further includes: carrying identification information of the target UE and/or a measurement result of the target UE in a discovery signal.

In the technical solution, after determining that the second UE is able to be the target UE, the first UE can carry the identification information of the target UE and/or the measurement result of the target UE in the discovery signal, so that the target UE can use the relay function of the first UE based on the discovery signal.

In an optional implementation, the measurement result is strength-weakness indication information, and the method further includes: comparing the signal strength between the first UE and the target UE with a second threshold; and determining the strength-weakness indication information of the target UE according to a comparison result of the signal strength between the first UE and the target UE and the second threshold.

Optionally, carrying the identification information of the target UE in the discovery signal includes: carrying the identification information of the target UE in a corresponding list in the discovery signal according to the strength-weakness indication information of the target UE.

Optionally, the second threshold is provided by at least one of a network device, a high layer, an application layer, or the target UE.

In a second aspect, the embodiments of the present disclosure provide a method for target UE determination in a UE to UE relay scenario. The method is performed by a second UE, and the method includes: transmitting first information to a first UE, the first information being used to determine whether the second UE is able to be a target UE.

In an implementation, the first information includes at least one of: a first threshold; a first time period; or service indication information, the service indication information being used to determine the first threshold and/or the first time period.

In an optional implementation, the first information further includes a second threshold, the second threshold being used to determine strength-weakness indication information of the target UE.

In a third aspect, the embodiments of the present disclosure provide a method for target UE determination in a UE to UE relay scenario. The method is performed by a network device, and the method includes: transmitting second information to a first UE, the second information being used to determine a first threshold and/or a first time period, in which the first threshold and/or the first time period is used to determine whether a second UE is able to be a target UE; in which the second UE is a neighboring UE for the first UE.

In an implementation, the second information includes at least one of: a threshold and a correspondence relationship between the threshold and a service; or a time period and a correspondence relationship between the time period and a service.

In a fourth aspect, the embodiments of the present disclosure provide a communication apparatus, which has part or all of the functions of the UE in the methods described in the first aspect above. For example, the functions of the communication apparatus may have part or all of the functions in the embodiments of the present disclosure, or may have the functions of implementing any one of the embodiments of the present disclosure alone. The functions may be implemented by hardware, or may be implemented by hardware executing corresponding software. The hardware or software includes one or more units or modules corresponding to the above functions.

In an implementation, the structure of the communication apparatus may include a transceiver module and a processing module. The processing module is configured to support the communication apparatus to perform the corresponding functions in the above methods. The transceiver module is configured to support communication between the communication apparatus and other devices. The communication apparatus may also include a storage module, which is coupled to the transceiver module and the processing module, and stores a computer program and data necessary for the communication apparatus.

As an example, the processing module may be a processor, the transceiver module may be a transceiver or a communication interface, and the storage module may be a memory.

In a fifth aspect, the embodiments of the present disclosure provide a communication apparatus, which has part or all of the functions of the UE in the methods described in the second aspect above. For example, the functions of the communication apparatus may have part or all of the functions in the embodiments of the present disclosure, or may have the functions of implementing any one of the embodiments of the present disclosure alone. The functions may be implemented by hardware, or may be implemented by hardware executing corresponding software. The hardware or software includes one or more units or modules corresponding to the above functions.

In an implementation, the structure of the communication apparatus may include a transceiver module and a processing module. The processing module is configured to support the communication apparatus to perform the corresponding functions in the above methods. The transceiver module is configured to support communication between the communication apparatus and other devices. The communication apparatus may also include a storage module, which is coupled to the transceiver module and the processing module, and stores a computer program and data necessary for the communication apparatus.

As an example, the processing module may be a processor, the transceiver module may be a transceiver or a communication interface, and the storage module may be a memory.

In a sixth aspect, the embodiments of the present disclosure provide a communication apparatus, which has part or all of the functions of the UE in the methods described in the third aspect above. For example, the functions of the communication apparatus may have part or all of the functions in the embodiments of the present disclosure, or may have the functions of implementing any one of the embodiments of the present disclosure alone. The functions may be implemented by hardware, or may be implemented by hardware executing corresponding software. The hardware or software includes one or more units or modules corresponding to the above functions.

In an implementation, the structure of the communication apparatus may include a transceiver module and a processing module. The processing module is configured to support the communication apparatus to perform the corresponding functions in the above methods. The transceiver module is configured to support communication between the communication apparatus and other devices. The communication apparatus may also include a storage module, which is coupled to the transceiver module and the processing module, and stores a computer program and data necessary for the communication apparatus.

As an example, the processing module may be a processor, the transceiver module may be a transceiver or a communication interface, and the storage module may be a memory.

In a seventh aspect, the embodiments of the present disclosure provide a communication apparatus, which includes a processor. When the processor calls a computer program in a memory, the method described in the first aspect is executed.

In an eighth aspect, the embodiments of the present disclosure provide a communication apparatus, which includes a processor. When the processor calls a computer program in a memory, the method described in the second aspect is executed.

In a ninth aspect, the embodiments of the present disclosure provide a communication apparatus, which includes a processor. When the processor calls a computer program in a memory, the method described in the third aspect is executed.

In a tenth aspect, the embodiments of the present disclosure provide a communication apparatus, which includes a processor, and a memory in which a computer program is stored; the processor executes the computer program stored in the memory, to cause the communication apparatus to execute the method described in the first aspect above.

In an eleventh aspect, the embodiments of the present disclosure provide a communication apparatus, which includes a processor, and a memory in which a computer program is stored; the processor executes the computer program stored in the memory, to cause the communication apparatus to execute the method described in the second aspect above.

In a twelfth aspect, the embodiments of the present disclosure provide a communication apparatus, which includes a processor, and a memory in which a computer program is stored; the processor executes the computer program stored in the memory, to cause the communication apparatus to execute the method described in the third aspect above.

In a thirteenth aspect, the embodiments of the present disclosure provide a communication apparatus, which includes a processor and an interface circuit. The interface circuit is configured to receive code instructions and transmit them to the processor, and the processor is configured to run the code instructions to enable the apparatus to execute the method described in the first aspect above.

In a fourteenth aspect, the embodiments of the present disclosure provide a communication apparatus, which includes a processor and an interface circuit. The interface circuit is configured to receive code instructions and transmit them to the processor, and the processor is configured to run the code instructions to enable the apparatus to execute the method described in the second aspect above.

In a fifteenth aspect, the embodiments of the present disclosure provide a communication apparatus, which includes a processor and an interface circuit. The interface circuit is configured to receive code instructions and transmit them to the processor, and the processor is configured to run the code instructions to enable the apparatus to execute the method described in the third aspect above.

In a sixteenth aspect, the embodiments of the present disclosure provide a system for target UE determination in a UE to UE relay scenario. The system includes the communication apparatus described in the fourth aspect, the communication apparatus described in the fifth aspect, and the communication apparatus described in the sixth aspect, or the system includes the communication apparatus described in the seventh aspect, the communication apparatus described in the eighth aspect, and the communication apparatus described in the ninth aspect, or the system includes the communication apparatus described in the tenth aspect, the communication apparatus described in the eleventh aspect, and the communication apparatus described in the twelfth aspect, or the system includes the communication apparatus described in the thirteenth aspect, the communication apparatus described in the fourteenth aspect, and the communication apparatus described in the fifteenth aspect.

In a seventeenth aspect, the embodiments of the present disclosure provide a computer-readable storage medium for storing instructions for the above-mentioned UE, and when the instructions are executed, the UE executes the method described in the above-mentioned first aspect.

In an eighteenth aspect, the embodiments of the present disclosure provide a readable storage medium for storing instructions used by the above-mentioned network device. When the instructions are executed, the network device executes the method described in the above-mentioned second aspect.

In a nineteenth aspect, an embodiment of the present invention provides a readable storage medium for storing instructions used by the above-mentioned network device, and when the instructions are executed, the network device executes the method described in the above-mentioned third aspect.

In a twentieth aspect, the present disclosure further provides a computer program product including a computer program that, when executed on a computer, enables the computer to execute the method described in the first aspect above.

In a twenty-first aspect, the present disclosure further provides a computer program product including a computer program that, when executed on a computer, enables the computer to execute the method described in the second aspect above.

In a twenty-second aspect, the present disclosure further provides a computer program product including a computer program, which, when executed on a computer, enables the computer to execute the method described in the third aspect above.

In a twenty-third aspect, the present disclosure provides a chip system, which includes at least one processor and an interface, for supporting a UE to implement the functions involved in the first aspect, for example, determining or processing at least one of data and information involved in the above methods. In a possible design, the chip system also includes a memory, which is configured to store a computer program and data necessary for the terminal device. The chip system may be composed of a chip, or it may include a chip and other discrete components.

In a twenty-fourth aspect, the present disclosure provides a chip system, which includes at least one processor and an interface, for supporting a network device to implement the functions involved in the second aspect, for example, determining or processing at least one of data and information involved in the above methods. In a possible design, the chip system also includes a memory, which is configured to store a computer program and data necessary for the terminal device. The chip system may be composed of a chip, or it may include a chip and other discrete components.

In a twenty-fifth aspect, the present disclosure provides a chip system, which includes at least one processor and an interface, for supporting a network device to implement the functions involved in the third aspect, for example, determining or processing at least one of data and information involved in the above methods. In a possible design, the chip system also includes a memory, which is configured to store a computer program and data necessary for the terminal device. The chip system may be composed of a chip, or it may include a chip and other discrete components.

In a twenty-sixth aspect, the present disclosure provides a computer program which, when executed on a computer, enables the computer to execute the method described in the first aspect above.

In a twenty-seventh aspect, the present disclosure provides a computer program which, when executed on a computer, enables the computer to execute the method described in the second aspect above.

In a twenty-eighth aspect, the present disclosure provides a computer program which, when executed on a computer, enables the computer to execute the method described in the third aspect above.

### BRIEF DESCRIPTION OF THE DRAWINGS

In order to more clearly illustrate the technical solutions in the embodiments of the present disclosure or the background technologies, the drawings required for use in the embodiments of the present disclosure or the background technologies will be described below.
FIG. 1 is a schematic diagram of an architecture of a communication system provided by an embodiment of the present disclosure.
FIG. 2 is a flow chart of a method for target UE determination in a UE to UE relay scenario provided by an embodiment of the present disclosure.
FIG. 3 is a flow chart of another method for target UE determination in a UE to UE relay scenario provided by an embodiment of the present disclosure.
FIG. 4 is a flow chart of another method for target UE determination in a UE to UE relay scenario provided by an embodiment of the present disclosure.
FIG. 5 is a flow chart of another method for target UE determination in a UE to UE relay scenario provided by an embodiment of the present disclosure.
FIG. 6 is a flow chart of another method for target UE determination in a UE to UE relay scenario provided by an embodiment of the present disclosure.
FIG. 7 is a structural schematic diagram of a communication apparatus provided by an embodiment of the present disclosure.
FIG. 8 is a structural schematic diagram of another communication apparatus provided in an embodiment of the present disclosure.
FIG. 9 is a structural schematic diagram of a chip provided in an embodiment of the present disclosure.

### DETAILED DESCRIPTION

Embodiments of the present disclosure are described in detail below, and examples of the embodiments are shown in the accompanying drawings, in which the same or similar reference numerals throughout represent the same or similar elements or elements having the same or similar functions. The embodiments described below with reference to the accompanying drawings are exemplary and are intended to be used to explain the present disclosure, and should not be construed as limitations on the present disclosure. In the description of the present disclosure, unless otherwise specified, "/" means or, for example, A/B can mean A or B; "and/or" in the present disclosure is merely a description of the association relationship of associated objects, indicating that three relationships may exist, for example, A and/or B can mean: A exists alone, A and B exist at the same time, and B exists alone.

In order to better understand the method for target UE determination in a UE to UE relay scenario provided in the embodiments of the present disclosure, a communication system to which the embodiments of the present disclosure are applicable is first described below.

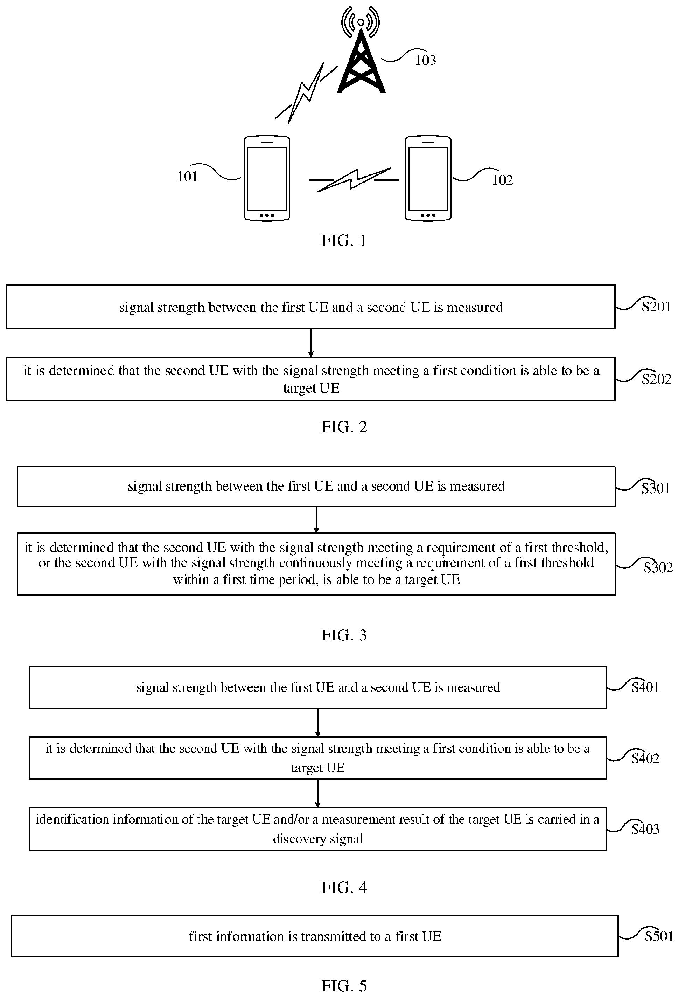

Please refer to Fig. 1, which is a schematic diagram of an architecture of a communication system provided by an embodiment of the present disclosure. The communication system may include but is not limited to a first terminal device, a second terminal device and a network device. The number and form of devices shown in Fig. 1 are only used for example and do not constitute a limitation on the embodiments of the present disclosure. In actual applications, two or more first terminal devices, two or more second terminal devices and two or more network devices may be included. The communication system shown in Fig. 1 takes a first terminal device 101, a second terminal device 102 and a network device 103 as an example.

It should be noted that the technical solutions of the embodiments of the present disclosure are applicable to various communication systems, such as a long term evolution (LTE) system, a fifth generation (5G) mobile communication system, an NR system, or other future new mobile communication systems.

The network device 103 in the embodiments of the present disclosure is an entity on a network for transmitting or receiving signals. For example, the network device 101 may be an evolved base station, a transmission reception point (TRP), a next generation NodeB (gNB) in an NR system, a base station in other future mobile communication systems, or an access node in a wireless fidelity (WiFi) system. The embodiments of the present disclosure do not limit the specific technology and specific device form adopted by the network device. The network device provided in the embodiments of the present disclosure may be composed of a centralized unit (CU) and a distributed unit (DU), in which the CU may also be referred to as a control unit. The CU-DU structure may be used to split a protocol layer of the network device, such as a base station, and part of the functions the protocol layer are placed in the CU for centralized control, and part or all of the remaining functions of the protocol layer are distributed in the DU, and the DU is centrally controlled by the CU.

The first terminal device 101 and the second terminal device 102 in the embodiments of the present disclosure are entities for receiving or transmitting signals for a user, such as a mobile phone. The terminal device may also be referred to as a terminal, a user equipment (UE), a mobile station (MS), a mobile terminal device (MT), etc. The terminal device may be a car with communication function, a smart car, a mobile phone, a wearable device, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in a smart city (smart city), a wireless terminal device in a smart home (smart home), etc. The embodiments of the present disclosure do not limit the specific technology and specific device form adopted by the terminal device. It can be understood that the communication system described in the embodiments of the present disclosure is for the purpose of more clearly illustrating the technical solutions of the embodiments of the present disclosure, and does not constitute a limitation on the technical solutions provided by the embodiments of the present disclosure. A person skilled in the art can know that with the evolution of the system architecture and the emergence of new service scenarios, the technical solutions provided by the embodiments of the present disclosure are also applicable to similar technical problems.

The method and apparatus for target UE determination in a UE to UE relay scenario provided by the present disclosure are described in detail below in conjunction with the accompanying drawings.

Please refer to Fig. 2, which is a flow chart of a method for target UE determination in a UE to UE relay scenario provided by an embodiment of the present disclosure. The method is performed by a first UE. As shown in Fig. 2, the method may include but is not limited to the following steps.

Step S201, signal strength between the first UE and a second UE is measured.

In an embodiment of the present disclosure, the signal strength may be sidelink discovery reference signal receiving power (SD-RSRP) or sidelink reference signal receiving power (SL-RSRP). The SD-RSRP is an RSRP of a discovery signal transmitted by the sidelink second UE, and the SL-RSRP is a communication signal RSRP of the sidelink with the second UE.

As an example, when the first UE receives the discovery signal of the second UE, the first UE measures the SD-RSRP between the first UE and the second UE.

As another example, when the first UE has established a sidelink unicast connection with the second UE, the first UE measures the SL-RSRP between the first UE and the second UE.

It should be noted that, in the embodiments of the present disclosure, the first UE is a relay UE in the UE to UE relay scenario, and the second UE is a remote UE in the UE to UE relay scenario.

Step S202, it is determined that the second UE with the signal strength meeting a first condition is able to be a target UE.

Optionally, in the UE to UE relay scenario, the first UE may transmit a discovery signal, the discovery signal carries a sidelink identifier of the target UE that is able to establish a sidelink connection with the first UE. After receiving the discovery signal transmitted by the first UE, the second UE may determine whether it is the target UE that establishes the sidelink connection with the first UE based on the sidelink identifier carried in the discovery signal, thereby determining whether to perform UE to UE relay communication with the first UE.

Optionally, the first UE may determine that the second UE with the signal strength meeting the first condition is able to be the target UE. That is, the first UE may determine the second UE whose signal strength meets the first condition as the target UE being able to establish the sidelink connection.

In some implementations of the present disclosure, the second UE whose signal strength meets the first condition may be determined as the target UE that can perform relay communication through the relay function of the first UE, and the sidelink link may be established with the second UE so that the second UE may communicate using the relay function of the first UE.

In some other implementations of the present disclosure, the second UE whose signal strength meets the first condition may be determined as a candidate target UE that can perform relay communication through the relay function of the first UE. When the second UE needs to perform relay communication through the first UE, the sidelink link may be directly established with the second UE.

By implementing the embodiments of the present disclosure, the first UE can determine whether the second UE is able to be the target UE based on the signal strength between the first UE and the second UE, thereby solving the problem that the relay UE cannot determine the target UE in the UE to UE relay scenario.

In some embodiments of the present disclosure, the signal strength meeting the first condition may include: the signal strength meeting a requirement of a first threshold; or the signal strength continuously meeting the requirement of the first threshold within a first time period. Optionally, please refer to Fig. 3, which is a flow chart of a method for target UE determination in a UE to UE relay scenario provided by an embodiment of the present disclosure. The method is performed by a first UE. As shown in Fig. 3, the method may include but is not limited to the following steps.

Step S301, signal strength between the first UE and a second UE is measured.

In the embodiments of the present disclosure, step S301 may be implemented in any of the embodiments of the present disclosure, which is not limited by the embodiments of the present disclosure and will not be described in detail. For example, the signal strength between the first UE and the second UE may be measured in the manner as in step 201, which will not be described in detail.

Step S302, it is determined that the second UE with the signal strength meeting a requirement of a first threshold, or the second UE with the signal strength continuously meeting a requirement of a first threshold within a first time period, is able to be a target UE.

As an example, it is determined that the second UE with the signal strength between the first UE and the second UE meeting the requirement of the first threshold (for example, greater than or equal to the first threshold) is able to be the target UE.

As another example, it is determined that the second UE with the signal strength between the first UE and the second UE that meets the requirement of the first threshold in a time period being greater than or equal to the first time period, is able to be the target UE.

In an optional implementation, the first threshold is a minimum threshold, and the signal strength meeting the requirement of the first threshold includes: the signal strength being greater than or equal to the minimum threshold; or, the first threshold includes a minimum threshold and a maximum threshold, and the signal strength meeting the requirement of the first threshold includes: the signal strength being greater than or equal to the minimum threshold and being less than or equal to the maximum threshold.

For example, taking the first threshold being the minimum threshold as an example, the second UE with the signal strength between the first UE and the second UE being greater than or equal to the first threshold is determined as being able to be the target UE.

For another example, taking the first threshold being the minimum threshold as an example, the second UE with the signal strength between the first UE and the second UE being greater than or equal to the first threshold for a duration greater than or equal to the first time period is determined as being able be the target UE.

For another example, taking the first threshold including the minimum threshold and the maximum threshold as an example, the second UE with the signal strength between the first UE and the second UE being greater than or equal to the minimum threshold and less than or equal to the maximum threshold is determined as being able to be the target UE.

For another example, taking the first threshold including the minimum threshold and the maximum threshold as an example, the second UE with the signal strength between the first UE and the second UE being greater than or equal to the minimum threshold and less than or equal to the maximum threshold for a duration greater than or equal to the first time period is determined as being able to be a target UE.

By implementing the embodiments of the present disclosure, the first UE can determine whether the second UE is able to be the target UE based on the signal strength between the first UE and the second UE, the first threshold and the first time period, thereby solving the problem that the relay UE cannot determine the target UE in the UE to UE relay scenario.

In some embodiments of the present disclosure, the above-mentioned method for target UE determination in a UE to UE relay scenario may also include: determining the first threshold and/or the first time period based on the second UE.

As an example, the first UE determines the first threshold based on information transmitted by the second UE.

As another example, the first UE determines the first time period based on information transmitted by the second UE.

As another example, the first UE determines the first threshold and the first time period based on information transmitted by the second UE.

In an optional implementation, the above-mentioned determining the first threshold and/or the first time period based on the second UE may include: determining a correspondence relationship between a threshold and/or a time period and a service; receiving service indication information transmitted by the second UE; and determining the first threshold and/or the first time period according to the service indication information and the correspondence relationship.

For example, taking the determination of the first threshold based on the second UE as an example, different thresholds are set in advance for different service information to obtain the correspondence relationship between different service information and different thresholds; after the first UE receives the service indication information transmitted by the second UE, it determines the service information indicated by the service indication information, then determines a threshold corresponding to the service information based on the service information and the above-mentioned correspondence relationship, and determines the threshold corresponding to the service information as the first threshold.

For another example, taking the determination of the first time period based on the second UE as an example, different time periods are set in advance for different service information to obtain the correspondence relationship between different service information and different time periods; after the first UE receives the service indication information transmitted by the second UE, it determines the service information indicated by the service indication information, then determines a time period corresponding to the service information based on the service information and the above-mentioned correspondence relationship, and determines the time period corresponding to the service information as the first time period.

For another example, taking the determination of the first threshold and the first time period based on the second UE as an example, different thresholds are set in advance for different service information to obtain the correspondence relationship between different service information and different thresholds, and different time periods are set in advance for different service information to obtain the correspondence relationship between different service information and different time periods, and the service information corresponding to different thresholds is different from the service information corresponding to different time periods; the first UE receives the service indication information for indicating the first threshold and the service indication information for indicating the first time period transmitted by the second UE, thereby determining a corresponding threshold and time period according to the above-mentioned service information and the above-mentioned correspondence relationship, and determines the threshold corresponding to the above-mentioned service information as the first threshold, and determining the time period corresponding to the above-mentioned service information as the first time period.

As another example, a corresponding threshold and time period are set in advance for each type of service information, and the thresholds and time periods corresponding to different service information are different, thereby obtaining the correspondence relationship between different service information and different thresholds and time periods; the first UE receives the service indication information transmitted by the second UE, determines the service information indicated by the service indication information, then determines a threshold and a time period corresponding to the service information based on the service information and the above-mentioned correspondence relationship, and determines the threshold corresponding to the service information as the first threshold, and determines the time period corresponding to the service information as the first time period.

It should be noted that, in the embodiments of the present disclosure, the service indication information may be a relay service code (RSC).

Optionally, the correspondence relationship between the threshold and/or time period and the service may be provided by at least one of a network device, a high layer, or an application layer.

In an implementation of the embodiments of the present disclosure, after determining that the second UE is able to be the target UE, the first UE may also transmit a discovery signal carrying identification information of the target UE and/or a measurement result of the target UE. As an example, please refer to Fig. 4, which is a flow chart of another method for target UE determination in a UE to UE relay scenario provided by an embodiment of the present disclosure. The method is performed by the first UE. As shown in Fig. 4, the method may include but is not limited to the following steps.

Step S401, signal strength between the first UE and a second UE is measured.

In the embodiments of the present disclosure, step S401 may be implemented in any of the embodiments of the present disclosure, which is not limited by the embodiments of the present disclosure and will not be described in detail. For example, the signal strength between the first UE and the second UE may be measured in the manner as in step 201, which will not be described in detail.

Step S402, it is determined that the second UE with the signal strength meeting a first condition is able to be a target UE.

In the embodiments of the present disclosure, step S402 may be implemented in any manner in the embodiments of the present disclosure, which is not limited by the embodiments of the present disclosure and will not be described in detail.

Step S403, identification information of the target UE and/or a measurement result of the target UE is carried in a discovery signal.

The identification information may include a sidelink identification of the target UE that is able to establish a sidelink connection with the first UE. When the discovery signal carries the identification information, after a remote UE receives the discovery signal from a relay UE, it determines whether it is the target UE based on the UE identification carried in the discovery signal, thereby determining whether to select the first UE as the relay UE for UE to UE relay communication.

As an example, the first UE carries the identification information of the target UE in the transmitted discovery signal.

As another example, the first UE carries the measurement result of the target UE in the transmitted discovery signal.

As another example, the first UE carries the identification information of the target UE and the measurement result of the target UE in the transmitted discovery signal.

In an optional implementation of the embodiments of the present disclosure, the above-mentioned measurement result is strength-weakness indication information; the above-mentioned method may also include the following steps: comparing the signal strength between the first UE and the target UE with a second threshold; and determining the strength-weakness indication information of the target UE according to a comparison result of the signal strength between the first UE and the target UE and the second threshold.

For example, the first UE compares the signal strength between the first UE and the target UE with the second threshold to obtain the comparison result; in response to the comparison result being that the signal strength between the first UE and the target UE is greater than or equal to the second threshold, the strength-weakness indication information of the target UE is determined to be strength indication information; or in response to the comparison result being that the signal strength between the first UE and the target UE is less than the second threshold, the strength-weakness indication information of the target UE is determined to be weakness indication information.

Optionally, carrying the identification information of the target UE in the discovery signal may include: carrying the identification information of the target UE in a corresponding list in the discovery signal according to the strength-weakness indication information of the target UE.

For example, different corresponding lists are set in advance for different strength-weakness indication information, and the list corresponding to the strength-weakness indication information of the target UE is determined according to the obtained strength-weakness indication information of the target UE, and the identification information of the target UE is carried in the list corresponding to the strength-weakness indication information of the target UE.

Optionally, the second threshold may be provided by at least one of a network device, a high layer, an application layer, or a target UE.

By implementing the embodiments of the present disclosure, after determining that the second UE is able to be the target UE, the first UE can carry the identification information of the target UE and/or the measurement result of the target UE in the discovery signal, so that the target UE can use the relay function of the first UE based on the discovery signal.

It can be understood that the above embodiments describe the implementations of the method for target UE determination in the UE to UE relay scenario of the embodiment of the present disclosure from the perspective of the first UE. The embodiments of the present disclosure also proposes another method for target UE determination in a UE to UE relay scenario, and implementations of the method for target UE determination in the UE to UE relay scenario will be described from the perspective of the second UE below.

Please refer to Figure 5, which is another method for target UE determination in a UE to UE relay scenario provided by an embodiment of the present disclosure. The method is executed by a second UE. As shown in Figure 5, the method may include but is not limited to the following step.

Step S501, first information is transmitted to a first UE.

In the embodiments of the present disclosure, the first information is used to determine whether the second UE is able to be a target UE.

For example, the second UE transmits to the first UE the first information used to determine whether the second UE is able to be the target UE.

In an implementation, the first information includes at least one of: a first threshold; a first time period; or service indication information, the service indication information being used to determine the first threshold and/or the first time period.

As an example, the service indication information is service indication information used by the first UE for determining the first threshold.

As another example, the service indication information is service indication information used by the first UE for determining the time period.

As another example, the service indication information is service indication information used by the first UE for determining the first threshold and the first time period.

In an optional implementation, the first information also includes a second threshold, and the second threshold is used to determine strength-weakness indication information of the target UE.

For example, the second UE transmits the first information including the second threshold to the first UE, so that the first UE can determine the strength-weakness indication information of the second UE based on the second threshold.

By implementing the embodiments of the present disclosure, the second UE can transmit the first information to the first UE, so that the first UE can determine whether the second UE is able to be the target UE based on the specific information in the first information, thereby solving the problem that the relay UE cannot determine the target UE in the UE to UE relay scenario. In an implementation, the embodiment shown in Fig. 5 may be implemented together with any one of the embodiments in Fig. 2, Fig. 3, or Fig. 4. That is, the target UE may be determined through any one of the embodiments in Fig. 2, Fig. 3, or Fig. 4, and the first information may be transmitted by the second UE to the first UE through the embodiment shown in Fig. 5 to notify the first UE whether the second UE is able to the target UE.

It can be understood that the above embodiments describe the implementations of the method for target UE determination in the UE to UE relay scenario of the embodiments of the present disclosure from the perspectives of the first UE and the second UE. The embodiments of the present disclosure also propose another method for target UE determination in a UE to UE relay scenario, and the implementations of the method for target UE determination in the UE to UE relay scenario will be described below from the perspective of the network device.

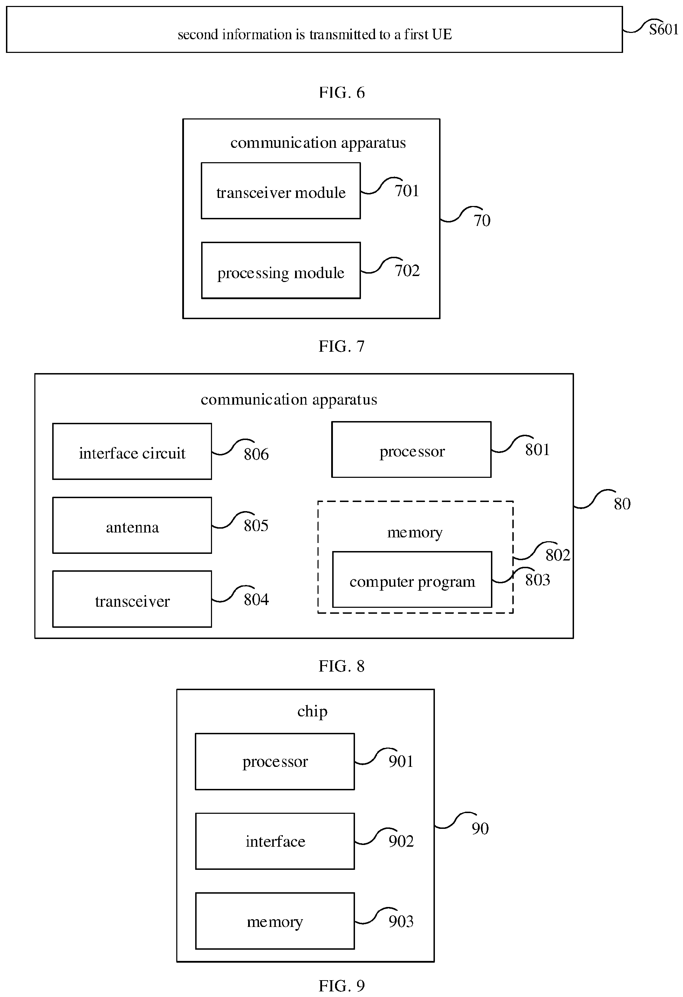

Please refer to Fig. 6, which is another method for target UE determination in a UE to UE relay scenario provided by an embodiment of the present disclosure. The method is performed by a network device. As shown in Fig. 6, the method may include but is not limited to the following step.

Step S601, second information is transmitted to a first UE.

The second information is used to determine a first threshold and/or a first time period; in which the first threshold and/or the first time period is used to determine whether a second UE is able to be a target UE.

As an example, the network device transmits to the first UE the second information used to determine the first threshold, in which the first threshold is used to enable the first UE to determine whether the second UE is able to be the target UE.

As another example, the network device transmits to the first UE the second information used to determine the first time period, in which the first time period is used to enable the first UE to determine whether the second UE is able to be the target UE.

As another example, the network device transmits to the first UE the second information used to determine the first threshold and the first time period, in which the first threshold and the first time period are used to enable the first UE to determine whether the second UE is able to be the target UE.

The second UE is a neighboring UE for the first UE.

In an implementation, the second information includes at least one of: a threshold and a correspondence relationship between the threshold and a service; or a time period and a correspondence relationship between the time period and a service.

By implementing the embodiments of the present disclosure, the network device can transmit the indication information to the first UE, so that the first UE can determine whether the second UE is able to be the target UE based on the second information, thereby solving the problem that the relay UE cannot determine the target UE in the UE to UE relay scenario.

Please refer to Fig. 7, which is a structural schematic diagram of a communication apparatus 70 provided in an embodiment of the present disclosure. The communication apparatus 70 shown in Fig. 7 may include a transceiver module 701 and a processing module 702. The transceiver module 701 may include a transmitting module and/or a receiving module, the transmitting module is configured to implement a transmitting function, the receiving module is configured to implement a receiving function, and the transceiver module 701 may implement the transmitting function and/or the receiving function.

The communication apparatus 70 may be the first UE, or an apparatus in the first UE, or an apparatus that may be used in combination with the first UE; the communication apparatus 70 may be the second UE, or an apparatus in the second UE, or an apparatus that may be used in combination with the second UE; the communication apparatus 70 may be a network device, or an apparatus in the network device, or an apparatus that may be used in combination with the network device.

The communication apparatus 70 is a first UE, and the processing module 702 is configured to measure signal strength between the first UE and a second UE; and determine that the second UE with the signal strength meeting a first condition is able to be a target UE.

Through the apparatus of the embodiments of the present disclosure, the first UE can determine whether the second UE is able to be the target UE based on the signal strength between the first UE and the second UE, thereby solving the problem that the relay UE cannot determine the target UE in the UE to UE relay scenario.

In an implementation, the signal strength meeting the first condition includes: the signal strength meeting a requirement of a first threshold; or the signal strength continuously meeting the requirement of the first threshold within a first time period.

In an optional implementation, the first threshold is a minimum threshold, and the signal strength meeting the requirement of the first threshold includes: the signal strength being greater than or equal to the minimum threshold; or the first threshold includes the minimum threshold and a maximum threshold, and the signal strength meeting the requirement of the first threshold includes: the signal strength being greater than or equal to the minimum threshold and being less than or equal to the maximum threshold.

In an optional implementation, the transceiver module 701 is configured to: determine the first threshold and/or the first time period based on the second UE.

Optionally, the transceiver module 701 is specifically configured to: receive the first threshold and/or the first time period transmitted by the second UE.

Optionally, the processing module 702 is specifically configured to: determine a correspondence relationship between a threshold and/or a time period and a service; the transceiver module 701 is specifically configured to: receive service indication information transmitted by the second UE; the processing module 702 is further configured to: determine the first threshold and/or the first time period according to the service indication information and the correspondence relationship.

Optionally, the correspondence relationship between the threshold and/or time period and the service is provided by at least one of a network device, a high layer, or an application layer.

In an implementation, the transceiver module 701 is specifically configured to carry identification information of the target UE and/or a measurement result of the target UE in a discovery signal.

Optionally, the measurement result is strength-weakness indication information; the processing module 702 is further configured to: compare the signal strength between the first UE and the target UE with a second threshold; and determine the strength-weakness indication information of the target UE based on a comparison result of the signal strength between the first UE and the target UE and the second threshold.

Optionally, the transceiver module 701 is specifically configured to: carry the identification information of the target UE in a corresponding list in the discovery signal according to the strength-weakness indication information of the target UE.

Optionally, the second threshold is provided by at least one of a network device, a high layer, an application layer, or a target UE.

The communication apparatus 70 is a second UE, and the transceiver module 701 is configured to transmit first information to a first UE, the first information being used to determine whether the second UE is able to be a target UE.

In an implementation, the first information includes at least one of: a first threshold; a first time period; or service indication information, the service indication information being used to determine the first threshold and/or the first time period.

In an optional implementation, the first information also includes a second threshold, and the second threshold is used to determine strength-weakness indication information of the target UE.

Through the apparatuses of the embodiments of the present disclosure, the second UE can transmit the indication information to the first UE, so that the first UE can determine whether the second UE is able to be the target UE based on the indication information, thereby solving the problem that the relay UE cannot determine the target UE in the UE to UE relay scenario.

The communication apparatus 70 is a network device, and the transceiver module 701 is used to transmit second information to a first UE; the second information being used to determine a first threshold and/or a first time period, in which the first threshold and/or the first time period is used to determine whether a second UE is able to be a target UE; in which the second UE is a neighboring UE for the first UE.

In an implementation, the second information includes at least one of: a threshold and a correspondence relationship between the threshold and a service; or a time period and a correspondence relationship between the time period and a service.

Through the apparatuses of the embodiments of the present disclosure, the network device can transmit the indication information to the first UE, so that the first UE can determine whether the second UE is able to be the target UE based on the second information, thereby solving the problem that the relay UE cannot determine the target UE in the UE to UE relay scenario.

Please refer to Figure 8, which is a structural schematic diagram of another communication apparatus 80 provided in an embodiment of the present disclosure. The communication apparatus 80 may be a first UE, a second UE, or a network device, or a chip, a chip system or a processor that supports the first UE to realize the above-described methods, or a chip, a chip system or a processor that supports the second UE to realize the above-described methods, or a chip, a chip system or a processor that supports the network device to realize the above-described methods. The apparatus may be used to realize the methods described in the above method embodiments with reference to the descriptions of the above-described method embodiments.

The communication apparatus 80 may include one or more processors 801. The processor 801 may be a general purpose processor or a dedicated processor, such as, a baseband processor or a central processor. The baseband processor is used for processing communication protocols and communication data. The central processor is used for controlling the communication apparatus (e.g., base station, baseband chip, terminal, terminal chip, DU or DU, etc.), executing computer programs, and processing data of the computer programs.

Optionally, the communication apparatus 80 may further include one or more memories 802 on which a computer program 803 may be stored. When the processor 801 executes the computer program 803, the communication apparatus 80 is caused to perform the methods described in the above method embodiments. Optionally, data may also be stored in the memory 802. The communication apparatus 80 and the memory 802 may be provided separately or may be integrated together.

Optionally, the communication apparatus 80 may also include a transceiver 804 and an antenna 808. The transceiver 804 may be referred to as transceiver unit, transceiver machine, or transceiver circuit, for realizing the transceiver function. The transceiver 804 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 80 may also include one or more interface circuits 806. The interface circuits 806 are used to receive code instructions and transmit them to the processor 801. The processor 801 runs the code instructions to cause the communication apparatus 80 to perform the methods described in the method embodiments.

The processor 801 is configured to execute step S201 and step S202 in Fig. 2, step S301 and step S302 in Fig. 3, and step S401 and step S402 in Fig. 4. The transceiver 804 is configured to execute step S501 in Fig. 5, and step S601 in Fig. 6.

In an implementation, the processor 801 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 801 may store a computer program that can be executed by the processor 801 and may cause the communication apparatus 80 to perform the methods described in the method embodiments above. The computer program may be solidified in the processor 801, in which case the processor 801 may be implemented by hardware.

In an implementation, the communication apparatus 80 may include circuits. The circuits may implement the sending, receiving or communicating function in the preceding method embodiments. The processor and transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The scope of the communication apparatus described in the present disclosure is not limited thereto, and the structure of the communication apparatus may not be limited by Fig. 8. The communication apparatus may be a stand-alone device or may be part of a larger device. For example, the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, base stations, cloud devices, artificial intelligence devices, and the like; and
(6) others.

The case that the communication apparatus is a chip or a chip system can be referred to the schematic diagram of the chip shown in Fig. 9. The chip shown in Fig. 9 includes a processor 901 and an interface 902. There may be one or more processors 901, and there may be multiple interfaces 902.

In a case that the chip is used to implement the functions of the first UE, the processor 901 is configured to measure the signal strength between the first UE and the second UE; and determine that the second UE with the signal strength meeting the first condition is able to be the target UE.

In an implementation, the signal strength meeting the first condition includes: the signal strength meeting a requirement of a first threshold; or the signal strength continuously meeting the requirement of the first threshold within a first time period.

In an optional implementation, the first threshold is a minimum threshold, and the signal strength meeting the requirement of the first threshold includes: the signal strength being greater than or equal to the minimum threshold; or the first threshold includes the minimum threshold and a maximum threshold, and the signal strength meeting the requirement of the first threshold includes: the signal strength being greater than or equal to the minimum threshold and being less than or equal to the maximum threshold.

In an optional implementation, the interface 902 is configured to: determine the first threshold and/or the first time period based on the second UE.

Optionally, the interface 902 is specifically configured to: receive the first threshold and/or the first time period transmitted by the second UE.

Optionally, the processor 901 is specifically configured to: determine a correspondence relationship between a threshold and/or a time period and a service; the interface 902 is specifically configured to: receive service indication information transmitted by the second UE; the processing module 901 is further configured to: determine the first threshold and/or the first time period according to the service indication information and the correspondence relationship.

Optionally, the correspondence relationship between the threshold and/or time period and the service is provided by at least one of a network device, a high layer, or an application layer.

In an implementation, the interface 902 is specifically configured to: carry identification information of the target UE and/or a measurement result of the target UE in a discovery signal. Optionally, the measurement result is strength-weakness indication information; the processor 901 is further configured to: compare the signal strength between the first UE and the target UE with a second threshold; and determine the strength-weakness indication information of the target UE based on a comparison result of the signal strength between the first UE and the target UE and the second threshold.

Optionally, the interface 902 is specifically configured to: carry the identification information of the target UE in a corresponding list in the discovery signal according to the strength-weakness indication information of the target UE.

Optionally, the second threshold is provided by at least one of a network device, a high layer, an application layer, or a target UE.

In a case that the chip is configured to implement the functions of the second UE, the interface 902 is configured to transmit first information to a first UE, the first information being used to determine whether the second UE is able to be a target UE.

In an implementation, the first information includes at least one of: a first threshold; a first time period; or service indication information, the service indication information being used to determine the first threshold and/or the first time period.

In an optional implementation, the first information also includes a second threshold, and the second threshold is used to determine strength-weakness indication information of the target UE.

In a case that the chip is used to implement the functions of the network device, interface 902 is used to transmit second information to a first UE; the second information being used to determine a first threshold and/or a first time period, in which the first threshold and/or the first time period is used to determine whether a second UE is able to be a target UE; in which the second UE is a neighboring UE for the first UE.

In an implementation, the second information includes at least one of: a threshold and a correspondence relationship between the threshold and a service; or a time period and a correspondence relationship between the time period and a service.

Optionally, the chip further includes a memory 903, and the memory 903 is configured to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the present disclosure also provide a channel estimation system, which includes a communication apparatus as the first UE, a communication apparatus as the second UE and a communication apparatus as the network device in the embodiment of Fig. 7 above, or the system includes a communication apparatus as the first UE, a communication apparatus as the second UE and a communication apparatus as the network device in the embodiment of Fig. 8 above.

The present disclosure also provides a readable storage medium having instructions stored thereon. When the instructions are executed by a computer, the functions of any of the method embodiments described above are implemented.

The disclosure also provides a computer program product. When the computer program product is executed by a computer, the functions of any of the method embodiments described above are implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in the disclosure may be configured or may be predefined. The values of information in the tables are merely examples and may be configured to other values, which are not limited by the disclosure. When configuring the correspondence between the information and the parameter, it is not necessarily required that all the correspondences illustrated in the tables must be configured. For example, the correspondences illustrated in certain rows in the tables in the disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in the present disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the present disclosure, but the scope of protection of the present disclosure is not limited thereto. Those skilled in the art familiar to this technical field may easily think of changes or substitutions in the technical scope disclosed by the present disclosure, which shall be covered by the scope of protection of the disclosure. Therefore, the scope of protection of the disclosure shall be governed by the scope of protection of the attached claims.

## Claims

1. A method for target user equipment (UE) determination in a UE to UE relay scenario, performed by a first UE, comprising:
measuring signal strength between the first UE and a second UE; and
determining that the second UE with the signal strength meeting a first condition is able to be a target UE.

2. The method according to claim 1, wherein the signal strength meeting the first condition comprises:
the signal strength meeting a requirement of a first threshold; or
the signal strength continuously meeting the requirement of the first threshold within a first time period.

3. The method according to claim 2, wherein
the first threshold is a minimum threshold, and the signal strength meeting the requirement of the first threshold comprises: the signal strength being greater than or equal to the minimum threshold; or
the first threshold comprises the minimum threshold and a maximum threshold, and the signal strength meeting the requirement of the first threshold comprises: the signal strength being greater than or equal to the minimum threshold and being less than or equal to the maximum threshold.

4. The method according to claim 2 or 3, further comprising:
determining the first threshold and/or the first time period based on the second UE.

5. The method according to claim 4, wherein determining the first threshold and/or the first time period based on the second UE comprises:
receiving the first threshold and/or the first time period transmitted by the second UE.

6. The method according to claim 4, wherein determining the first threshold and/or the first time period based on the second UE comprises:
determining a correspondence relationship between a threshold and/or a time period and a service;
receiving service indication information transmitted by the second UE; and
determining the first threshold and/or the first time period according to the service indication information and the correspondence relationship.

7. The method according to claim 6, wherein the correspondence relationship between the threshold and/or the time period and the service is provided by at least one of a network device, a high layer, or an application layer.

8. The method according to any one of claims 1 to 7, further comprising:
carrying identification information of the target UE and/or a measurement result of the target UE in a discovery signal.

9. The method according to claim 8, wherein the measurement result is strength-weakness indication information, and the method further comprises:
comparing the signal strength between the first UE and the target UE with a second threshold; and
determining the strength-weakness indication information of the target UE according to a comparison result of the signal strength between the first UE and the target UE and the second threshold.

10. The method according to claim 9, wherein carrying the identification information of the target UE in the discovery signal comprises:
carrying the identification information of the target UE in a corresponding list in the discovery signal according to the strength-weakness indication information of the target UE.

11. The method according to claim 9 or 10, wherein the second threshold is provided by at least one of a network device, a high layer, an application layer, or the target UE.

12. A method for target user equipment (UE) determination in a UE to UE relay scenario, performed by a second UE, comprising:
transmitting first information to a first UE, the first information being used to determine whether the second UE is able to be a target UE.

13. The method according to claim 12, wherein the first information comprises at least one of:
a first threshold;
a first time period; or
service indication information, the service indication information being used to determine the first threshold and/or the first time period.

14. The method according to claim 13, wherein the first information further comprises a second threshold, the second threshold being used to determine strength-weakness indication information of the target UE.

15. A method for target user equipment (UE) determination in a UE to UE relay scenario, performed by a network device, comprising:
transmitting second information to a first UE, the second information being used to determine a first threshold and/or a first time period, wherein the first threshold and/or the first time period is used to determine whether a second UE is able to be a target UE;
wherein the second UE is a neighboring UE for the first UE.

16. The method according to claim 15, wherein the second information comprises at least one of:
a threshold and a correspondence relationship between the threshold and a service; or
a time period and a correspondence relationship between the time period and a service.

17. A communication apparatus, comprising:
a transceiver module, configured to measure signal strength between the first UE and a second UE;
a processing module, configured to determine that the second UE with the signal strength meeting a first condition is able to be a target UE.

18. The apparatus according to claim 17, wherein the signal strength meeting the first condition comprises:
the signal strength meeting a requirement of a first threshold; or
the signal strength continuously meeting the requirement of the first threshold within a first time period.

19. The apparatus according to claim 18, wherein
the first threshold is a minimum threshold, and the signal strength meeting the requirement of the first threshold comprises: the signal strength being greater than or equal to the minimum threshold; or
the first threshold comprises the minimum threshold and a maximum threshold, and the signal strength meeting the requirement of the first threshold comprises: the signal strength being greater than or equal to the minimum threshold and being less than or equal to the maximum threshold.

20. The apparatus according to claim 18 or 19, further comprising:
the transceiver module being further configured to determine the first threshold and/or the first time period based on the second UE.

21. The apparatus according to claim 20, wherein the transceiver module is specifically configured to:
receive the first threshold and/or the first time period transmitted by the second UE.

22. The apparatus according to claim 20, wherein
the processing module is specifically configured to determine a correspondence relationship between a threshold and/or a time period and a service;
the transceiver module is specifically configured to receive service indication information transmitted by the second UE; and
the processing module is further configured to determine the first threshold and/or the first time period according to the service indication information and the correspondence relationship.

23. The apparatus according to claim 22, wherein the correspondence relationship between the threshold and/or time period and the service is provided by at least one of a network device, a high layer, or an application layer.

24. The apparatus according to any one of claims 17 to 23, wherein the transceiver module is specifically configured to:
carry identification information of the target UE and/or a measurement result of the target UE in a discovery signal.

25. The apparatus according to claim 24, wherein the measurement result is strength-weakness indication information; and the processing module is further configured to:
compare the signal strength between the first UE and the target UE with a second threshold; and
determine the strength-weakness indication information of the target UE according to a comparison result of the signal strength between the first UE and the target UE and the second threshold.

26. The apparatus according to claim 25, wherein carrying the identification information of the target UE in the discovery signal comprises:
carrying the identification information of the target UE in a corresponding list in the discovery signal according to the strength-weakness indication information of the target UE.

27. The apparatus according to claim 25 or 26, wherein the second threshold is provided by at least one of a network device, a high layer, an application layer or the target UE.

28. A communication apparatus, comprising:
a transceiver module, configured to transmit first information to a first UE, the first information being used to determine whether the second UE is able to be a target UE.

29. The apparatus according to claim 28, wherein the first information comprises at least one of:
a first threshold;
a first time period; or
service indication information, the service indication information being used to determine the first threshold and/or the first time period.

30. The apparatus according to claim 29, wherein the first information further comprises a second threshold, the second threshold being used to determine strength-weakness indication information of the target UE.

31. A communication apparatus, comprising:
a transceiver module, configured to transmit second information to a first UE, the second information being used to determine a first threshold and/or a first time period, wherein the first threshold and/or the first time period is used to determine whether a second UE is able to be a target UE;
wherein the second UE is a neighboring UE for the first UE.

32. The apparatus according to claim 31, wherein the second information comprises at least one of:
a threshold and a correspondence relationship between the threshold and a service; or
a time period and a correspondence relationship between the time period and a service.

33. A communication apparatus, comprising a processor and a memory, wherein a computer program is stored in the memory, and the processor executes the computer program stored in the memory, to cause a user equipment to perform the method according to any one of claims 1 to 11.

34. A communication apparatus, comprising a processor and a memory, wherein a computer program is stored in the memory, and the processor executes the computer program stored in the memory, to cause a user equipment to perform the method according to any one of claims 12 to 14.

35. A communication apparatus, comprising a processor and a memory, wherein a computer program is stored in the memory, and the processor executes the computer program stored in the memory, to cause a user equipment to perform the method according to claim 15 or 16.

36. A computer-readable storage medium for storing instructions, wherein when the instructions are executed, the method according to any one of claims 1 to 11 is implemented.

37. A computer-readable storage medium for storing instructions, wherein when the instructions are executed, the method according to any one of claims 12 to 14 is implemented.

38. A computer-readable storage medium for storing instructions, wherein when the instructions are executed, the method according to claim 15 or 16 is implemented.
